(19) Europäisches Patentamt
European Patent Office
Office européen des brevets

(11) **EP 4 542 250 A1**

(12) **DEMANDE DE BREVET EUROPEEN**

(43) Date de publication:
**23.04.2025 Bulletin 2025/17**

(21) Numéro de dépôt: **24207249.4**

(22) Date de dépôt: **17.10.2024**

(51) Classification Internationale des Brevets (IPC):
**G01S 7/00** *(2006.01)* **G01S 13/86** *(2006.01)*

(52) Classification Coopérative des Brevets (CPC):
**G01S 7/003; G01S 13/867;** G01S 13/862;
G01S 13/865; G01S 13/87; G01S 13/9027;
G01S 13/9029

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **19.10.2023 FR 2311297**

(71) Demandeur: **THALES**
**92190 Meudon (FR)**

(72) Inventeurs:
• **GUERRINI, Gilles**
**33701 MERIGNAC Cedex (FR)**
• **FALOMIR, Ema**
**33701 MERIGNAC Cedex (FR)**

(74) Mandataire: **Atout PI Laplace**
**Immeuble Up On**
**25 Boulevard Romain Rolland**
**CS 40072**
**75685 Paris Cedex 14 (FR)**

(54) **PROCÉDÉ D AMÉLIORATION DES PERFORMANCES DE CAPTEURS DANS UN SYSTÈME COMPORTANT UNE PLURALITÉ DE PLATEFORMES EMBARQUANT CHACUNE AU MOINS UN CAPTEUR ET UN MODULE DE TRAITEMENT ÉLECTRONIQUE**

(57) Procédé d'amélioration des performances de capteurs (20) comprenant :
- capture d'une première image par un premier capteur (20) sur une première plateforme (30) et programmé selon une première configuration du premier capteur ;
- détermination, par un premier bloc de traitement (30) sur la première plateforme (10), en fonction de la première image capturée, de la localisation et la taille d'un objet détecté sur ladite première image ;
- capture d'une deuxième image comprenant ledit objet par un deuxième capteur (20) d'une deuxième plateforme et programmé en fonction de la localisation et la taille d'un objet détecté sur ladite première image

- détermination, par le deuxième bloc de traitement (30), en fonction de la deuxième image capturée, de la localisation et la taille dudit objet détecté sur ladite deuxième image;
- évaluation des tailles et localisations et sélection, en fonction de cette évaluation, de l'un des deux ensembles de localisation et taille;
- déclenchement de la programmation, selon une deuxième configuration fonction de la sélection, de celui des premier et deuxième capteurs (20) non programmé selon la sélection et capture d'une nouvelle image par ledit capteur ainsi programmé.

FIG.1

## Description

### Domaine technique :

L'invention se situe dans le domaine des systèmes de plateformes embarquant des capteurs opérant sur une zone d'intérêt commune. L'invention s'applique notamment au cas où l'ensemble de ces capteurs constituent des chaînes de capteurs, encore appelées suites de capteurs. Les capteurs considérés comportent des radars, par exemple possédant les modes GMTI/SAR et/ou ISAR, des boules optroniques EO/IR et/ou de détecteurs de radars. Ces systèmes sont préférablement aéroportés, mais une utilisation au sol sur des véhicules mobiles est possible.

On trouve de tels systèmes dans le domaine des avions de combat, des missions de Combat maritime, des acquisitions satellitaires ou des missions embarquées aéronautiques par exemple.

### Technique antérieure :

Les capteurs sur les plateformes accomplissent un ensemble d'actions essentielles à la réussite de la mission. Leurs fonctions couvrent des objectifs de mission très divers, allant de la prise d'image pour le renseignement aux fonctions de survie et de sécurité de leur plateforme ou des plateformes. Face à cet ensemble de fonctions, un opérateur du système tente d'exploiter du mieux possible l'ensemble de capteurs disponibles afin de mener à bien la mission et d'en optimiser ses résultats, c'est-à-dire d'atteindre les objectifs principaux et d'accomplir un maximum d'objectifs d'opportunité possible.

L'utilisation optimale des capteurs pour remplir une mission nécessite une connaissance des performances de ces capteurs afin de prendre les bonnes décisions. Les performances de ces capteurs dépendent de paramètres tels que l'implantation physique des capteurs sur les plates-formes aéroportées, les technologies utilisées mais également l'environnement d'utilisation des capteurs (météo...). Classiquement, des modèles de performances à base d'équations sont définis.

Il est aussi connu pour les radars d'avoir des modes auto adaptatifs permettant d'améliorer les réjections du fouillis. Usuellement en fonction des tailles de cibles recherchées et de leur cinématique il existe des modes préréglés permettant de tirer le meilleur du capteur. Cela ne s'avère toutefois pas suffisant.

il existe un besoin d'améliorer la qualité et la pertinence des détections effectuées à l'aide de tels systèmes.

### Résumé de l'invention :

A cet effet, suivant un premier aspect, la présente invention décrit un procédé d'amélioration des performances de capteurs dans un système comportant une pluralité de plateformes embarquant chacune au moins un capteur et un module de traitement électronique, les plateformes étant reliées par des liaisons de télétransmission, ledit procédé comportant les étapes suivantes :

- capture d'une première image par un premier capteur sur une première plateforme du système et programmé selon une première configuration du premier capteur ;

- détermination, par un premier bloc de traitement sur la première plateforme, d'un premier ensemble d'informations, en fonction de la première image capturée, ledit ensemble d'informations comprenant au moins une information de localisation d'un objet détecté sur ladite première image et une information indiquant la taille dudit objet ;

- télétransmission dudit premier ensemble d'information de la première plateforme à une deuxième plateforme ;

- réception, par la deuxième plateforme comprenant un deuxième capteur et un deuxième bloc de traitement, dudit premier ensemble d'information et détermination, par le deuxième module de traitement, d'une première configuration du deuxième capteur en fonction des informations de l'ensemble d'informations ;

- capture d'une deuxième image comprenant ledit objet par le deuxième capteur programmé selon ladite première configuration du deuxième capteur déterminée ;

- détermination, par le deuxième bloc de traitement, d'un deuxième ensemble d'informations, en fonction de la deuxième image capturée, ledit deuxième ensemble d'informations comprenant au moins une information de localisation dudit objet détecté sur ladite deuxième image et une information indiquant la taille dudit objet ;

- évaluation, en fonction des premier et deuxième ensembles d'informations, par l'un des premier et deuxième modules de traitement et sélection, en fonction de cette évaluation, d'un des premier et deuxième ensembles d'informations ;

- déclenchement de la programmation, selon une deuxième configuration fonction de l'ensemble d'informations sélectionné, de celui des premier et deuxième capteurs non programmé selon ledit ensemble d'informations sélectionné et capture d'une nouvelle image par ledit capteur programmé selon ladite deuxième configuration.

L'invention perme l'amélioration des performances de capteurs, en particulier dans un conteste de plateformes collaboratives décentralisées et permet notamment l'amélioration de la qualité de service de l'optique (EO/IR) par l'utilisation de moyens RADAR (GMTI & SAR) en considérant des zones d'analyse communes. Les mesures ciblées et des mesures statistiques pourront être effectuées par zone pour prendre en compte les spécificités des conditions de mesure respectives.

Les mesures effectuées par les capteurs sont exploitées pour permettre de mieux identifier l'objet, par exemple soit par mesure de contour, soit par mesure d'ombre portée. En fonction des mesures effectuées par un des capteurs (en fonction de leur qualité par exemple) dans une plateforme, les paramètres techniques d'au moins un autre des capteurs, située sur une autre plateforme, sont ajustés pour augmenter sa performance d'acquisition.

L'invention propose donc une solution automatique d'ajustement du capteur en fonction des paramètres et des acquisitions d'un autre capteur.

Dans des modes de réalisation, un tel procédé comprendra en outre l'une au moins des caractéristiques suivantes :

- ledit ensemble d'informations comprend en outre au moins une information relative à la capture d'image parmi : l'ouverture capteur, la résolution, la distance à l'objet, la classification de l'objet ;

- les spectres d'acquisition des premier et deuxième capteurs sont séparés, par exemple un des premier et deuxième capteurs est de type radar et l'autre des premier et deuxième capteur est de type EO/IR ;

- les étapes du procédé sont mises en oeuvre cycliquement entre des couples distincts de plateformes du système ;

- ledit procédé comprend en outre le déclenchement de la programmation, selon une troisième configuration fonction de l'ensemble d'informations sélectionné, d'un capteur d'une plateforme distincte des première et deuxième plateformes et capture d'une nouvelle image par ledit capteur programmé selon ladite troisième configuration.

Suivant un autre aspect, l'invention décrit un système comportant une pluralité de plateformes embarquant chacune au moins un capteur et un module de traitement électronique, les plateformes étant reliées par des liaisons de télétransmission, adapté pour mettre en oeuvre les opérations suivantes: un premier capteur sur une première plateforme du système et programmé selon une première configuration du premier capteur est adapté pour capturer une première image par; un premier bloc de traitement sur la première plateforme, est adapté pour déterminer un premier ensemble d'informations, en fonction de la première image capturée, ledit ensemble d'informations comprenant au moins une information de localisation d'un objet détecté sur ladite première image et une information indiquant la taille dudit objet ; la première plateforme est adapté pour télétransmettre ledit premier ensemble d'information à une deuxième plateforme ; ladite deuxième plateforme comprenant un deuxième capteur et un deuxième bloc de traitement, est adaptée pour recevoir ledit premier ensemble d'information et le deuxième module de traitement est adapté pour déterminer, une première configuration du deuxième capteur en fonction des informations de l'ensemble d'informations ; le deuxième capteur est adapté pour, programmé selon ladite première configuration du deuxième capteur déterminée, capturer une deuxième image comprenant ledit objet ; le deuxième bloc de traitement est adapté pour déterminer un deuxième ensemble d'informations, en fonction de la deuxième image capturée, ledit deuxième ensemble d'informations comprenant au moins une information de localisation dudit objet détecté sur ladite deuxième image et une information indiquant la taille dudit objet ; l'un des premier et deuxième modules de traitement est adapté pour effectuer une évaluation, en fonction des premier et deuxième ensembles d'informations, et pour sélectionner, en fonction de cette évaluation, un des premier et deuxième ensembles d'informations ; ledit système étant adapté pour déclencher la programmation, selon une deuxième configuration fonction de l'ensemble d'informations sélectionné, de celui des premier et deuxième capteurs non programmé selon ledit ensemble d'informations sélectionné et pour déclencher la capture d'une nouvelle image par ledit capteur programmé selon ladite deuxième configuration.

Dans des modes de réalisation, un tel système comprendra en outre l'une au moins des caractéristiques suivantes :

- ledit ensemble d'informations comprend en outre au moins une information relative à la capture d'image parmi : l'ouverture capteur, la résolution, la distance à l'objet, la classification de l'objet ;

- les spectres d'acquisition des premier et deuxième capteurs sont séparés, par exemple un des premier et deuxième capteurs est de type radar et l'autre des premier et deuxième capteur est de type EO/IR ;

- ledit système est adapté pour mettre en oeuvre cycliquement lesdites opérations entre des couples distincts de plateformes du système ;

- ledit système est adapté en outre pour déclencher la programmation, selon une troisième configuration fonction de l'ensemble d'informations sélectionné, d'un capteur d'une plateforme distincte des première et deuxième plateformes et capture d'une nouvelle image par ledit capteur programmé selon ladite troisième configuration.

**Brève description des figures :**

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 représente schématiquement un système de plateformes de capteurs embarqués dans un mode de réalisation de l'invention ;

[Fig. 2] La figure 2 représente des étapes d'un procédé d'amélioration des performances de capteurs embarqués dans un mode de réalisation de l'invention ;

[Fig. 3] La figure 3 illustre les étapes de calcul des contours d'un objet dans une image à l'aide du filtre de Sobel ;

[Fig. 4] La figure 4 est une représentation de la surface apparente $T_{obj}^{réel}$ ;

[Fig. 5] La figure 5 illustre un calcul d'ombre d'un objet.

Des références identiques peuvent être utilisées dans des figures différentes lorsqu'elles désignent des éléments identiques ou comparables.

**Description détaillée :**

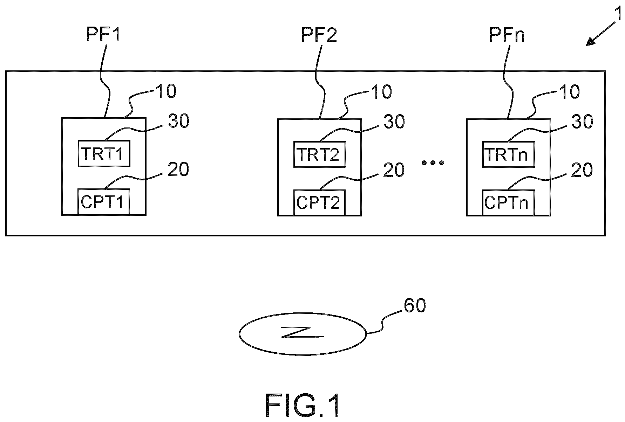

La figure 1 représente schématiquement un système 1 de plateformes de capteurs embarqués dans un mode de réalisation de l'invention. Le système 1 comporte n plateformes 10, nommées PF1, ..., PFn, qui sont mobiles ou non, avec n supérieur ou égal à 2. Selon les modes de réalisation, une ou des plateformes sont de type aéronef ou véhicule terrestre ou bâtiment maritime, satellites, éléments mobiles terrestres. Par exemple, dans le cas considéré, les plateformes sont des drones.

Chaque plateforme PFi 10, i = 1 à n, comporte au moins un capteur 20, CPTi, et un module de traitement 30, TRTi. Selon les modes de réalisation, un ou des capteurs 20 sont de type radar, ou lidar ou sonar ou de type imagerie optique, par exemple de type ElectroOptique ou InfraRouge (EO/IR) ou hyperspectral (HSI).... Un capteur radar 20 est par exemple de type GMTI (de l'anglais « Ground Moving Target Indicator » soit, en français « Indicateur de la Cible en Déplacement au Sol »), SAR (de l'anglais « Synthetic Aperture Radar », soit en français « Radar à Synthèse d'Ouverture »), ISAR (de l'anglais « Inverse Synthetic Aperture Radar », soit en français « Radar à à Synthèse d'Ouverture Inverse »), etc.

Chaque capteur 20, CPTi, est adapté pour effectuer des mesures de grandeurs physiques fonction de sa technologie (échos pour les radars, sonars, lidars ; luminosité, température ... pour les autres et pour convertir les mesures en signal de sortie électrique et les fournir en entrée du module de traitement 30, TRTi.

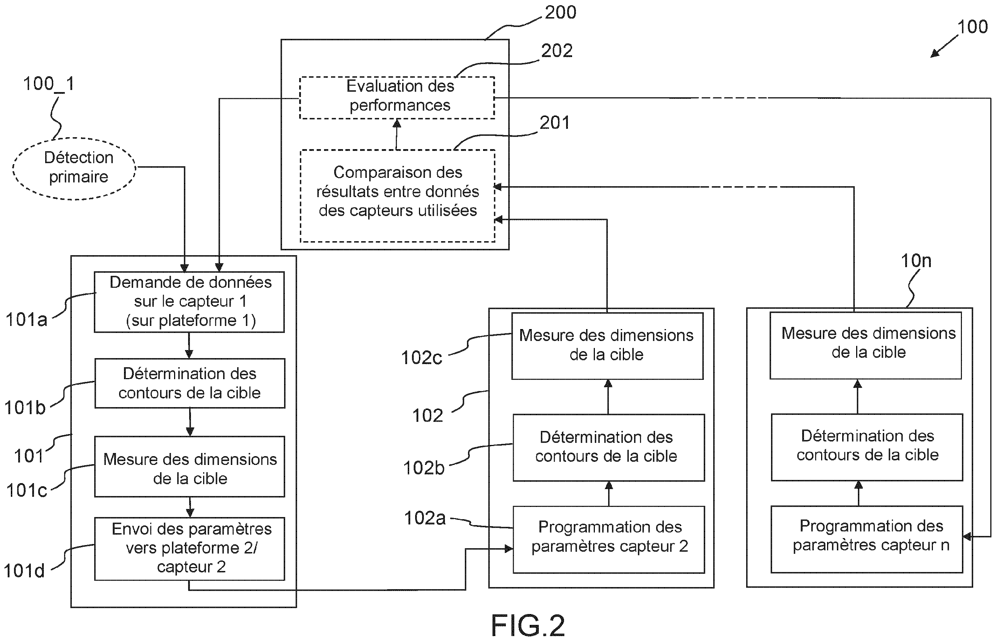

Le module de traitement 30, TRTi, est adapté pour effectuer des traitements algorithmiques en fonction de ce signal électrique fourni en entrée. Il est notamment adapté pour mettre en oeuvre les étapes décrites plus bas en référence à la figure 2 et qui lui incombent. Dans un mode de réalisation, le module de traitement 30, TRTi comprend une mémoire et un processeur (non représentés). Les étapes mentionnées sont par exemple mises en oeuvre par l'exécution sur le processeur d'instructions logicielles stockées dans la mémoire. Alternativement, elles sont mises en oeuvre par un hardware dédié, typiquement un circuit intégré numérique, soit spécifique (ASIC) ou basé sur une logique programmable (par exemple FPGA/Field Programmable Gate Array).

Dans le cas considéré, le capteur 20 CPT1 est de type RADAR en mode SAR et le capteur 20 CPT2 est de type EO/IR. Les capteurs 20 visent une zone d'intérêt commune 60, Z.

Il existe des liaisons de télétransmission (non représentées), filaires ou non filaires entre les plateformes 10, notamment entre deux plateformes quelconques impliquées dans le procédé décrit plus bas.

Un procédé 100 d'amélioration des performances des capteurs embarqués du système 1 est maintenant décrit dans un mode de réalisation de l'invention, en référence à la figure 2.

Dans une étape 100_1, une détection primaire est effectuée par le capteur 20 CPT1 (RADAR) suite à une phase d'analyse des échos reçus suite à une émission radar: la présence d'un objet est déterminée sur la zone de détection Z 60 en fonction de ces échos par le capteur 20 CPT1.

Dans une étape 101, les sous-étapes 101a, 101b, 101c, 101d sont alors mises en oeuvre au sein de la plateforme PF1.

Dans la sous-étape 101a, le radar 20 CPT1 effectue une imagerie SAR sur la zone de détection Z 60. Dans la sous-étape 101b, à partir de l'image SAR obtenue, le module de traitement 30 TRT1 détermine une localisation de l'objet (sous forme de coordonnées géographiques) et effectue un traitement algorithmique de détermination de contours de l'objet sur l'image SAR. Dans la sous-étape 101c, en fonction des contours déterminés, le module de traitement 30 TRT1 détermine alors les dimensions de l'objet, par exemple ici sous forme du calcul de la Surface Equivalente de l'objet et en déduit le couple des données déterminées {Localisation ; dimensions de l'objet (ici Surface équivalente)}.

Dans la sous-étape 101d, le module de traitement 30 TRT1 transmet au module de traitement 30 TRT2 le couple des données déterminées {Localisation ; dimensions de l'objet (ici Surface équivalente)}.

Dans une étape 102, les sous-étapes 102a, 102b, 102c sont alors mises en oeuvre au sein de la plateforme PF2.

Sur réception du couple des données {Localisation ; Surface équivalente} transmises, dans la sous-étape 102a, le module de traitement 30 TRT2 calcule automatiquement la droite de visée du capteur 20 CPT2 (EO/IR) et le FOV (en anglais « Field of View » soit le champ de vision, qui comprend le calcul de résolution), en fonction de cette localisation et des dimensions de l'objet (ici Surface équivalente) de manière à ce que tout l'objet soit compris dans le FOV. Les valeurs des paramètres de capture d'image EO/IR du capteur 20 CPT2 sont réglées de manière à respecter cette droite de visée et ce FOV, et une image EO/IR de l'objet est alors capturée par le capteur 20 CPT2.

Dans la sous-étape 102b, à partir de l'image EO/IR obtenue, le module de traitement 30 TRT2 détermine une localisation de l'objet de l'objet (sous forme de coordonnées géographiques, effectue un traitement algorithmique de détermination de contours de l'objet sur l'image EO/IR. Dans la sous-étape 102c, en fonction des contours déterminés, le module de traitement 30 TRT2 détermine alors les dimensions de l'objet, par exemple ici sous forme du calcul de la Surface Equivalente de l'objet.

Ces mêmes calculs que ceux précédemment menés à l'étape 101 permettent ainsi à l'issue de l'étape 102c de déterminer une nouvelle valeur de la localisation et une nouvelle valeur des dimensions, soit un couple {Localisation ; Surface équivalente}.

Un ensemble 200 d'étapes est alors mis en oeuvre, comprenant les étapes 201 et 202. Dans le mode de réalisation considéré, cet ensemble d'étapes est mis en oeuvre par le module de traitement TRT2 30 de la plateforme PF2. Dans un autre mode de réalisation, il est effectué par le bloc de traitement de la plateforme PF, TRT1 30 après télétransmission par la plateforme PF2 à la plateforme PF1 des données issues du traitement de la plateforme PF2.

Dans l'étape 201, les couples {Localisation ; Surface équivalente} calculés respectivement par les modules de traitement 30 TRT1, TR2, i.e. respectivement {Localisation$_{CPT1}$ ; Surface Equivalente$_{CPT1}$}, {Localisation$_{CPT2}$ ; Surface Equivalente$_{CPT2}$}. sont comparés.

Puis dans l'étape 202 d'évaluation des performances, le module de traitement TRT2 30 évalue, en fonction de cette comparaison, lesquelles des valeurs des composantes des deux couples sont optimales, i.e. lequel correspond à une meilleure localisation et/ou à une meilleure résolution image (analyse de la performance capteurs).

On entend ici par « meilleure localisation » la localisation fournie par le capteur présentant la meilleure précision (elle est généralement fournie par l'industriel qui fabrique l'équipement ; elle varie généralement de 1 à 10 degrés par rapport à la position réelle de la cible selon l'équipement utilisé).

L'évaluation des performances comprend la mise à jour les valeurs des composantes « localisation » et « surface équivalente » en retenant pour chaque composante, la valeur optimale en terme de précision de localisation (composante localisation) et de résolution de l'objet observé (composante surface équivalente). Suite à la comparaison des résultats (étape 201), le couple {Localisation, Surface équivalente} est mis à jour (et ensuite enregistré dans une mémoire) si au moins la valeur d'une des deux composantes issues de CPT2 est évaluée « meilleure » que ceux calculés par la CPT1. Par exemple, si le CPT2 donne une meilleure résolution ou Surface équivalente de l'objet, mais pas une localisation plus précise, le nouveau Couple devient {Localisation$_{CP1}$ ; Surface Equivalente$_{CPT2}$}.

Ainsi, il est déterminé entre les deux localisations Localisation$_{CPT1}$ et Localisation$_{CPT2}$ laquelle correspond à la meilleure précision de localisation et il est évalué si la nouvelle mesure de la Surface équivalente signifie une amélioration de la résolution et/ou de la taille de l'objet. Par exemple, Le CPT1 peut donner la surface équivalente mais la résolution peut être améliorée par CPT2.

La résolution est considérée meilleure quand le nombre de pixels caractérisant le même objet, obtenu suite à la détection de contours, est plus important.

La meilleure précision de localisation correspond à la meilleure précision de capteur entre celles de CPT1 et CPT2, qui sont connues.

Dans un mode de réalisation, cette comparaison/évaluation est effectuée sur plus de deux couples, par exemple N couples provenant de N plateformes, avec N >2.

Le couple optimal est :

- renvoyé au module de traitement 30 de celle des deux plateformes PF1, PF2 qui n'était pas réglée selon le couple optimal, pour déterminer une adaptation de programmation du capteur CPT 20 en fonction de ce couple optimal et pour mettre en oeuvre l'adaptation de programmation du capteur CPT 20 pour avoir ainsi une meilleure qualité de l'image ; par exemple, ici le couple optimal est le couple déterminé à l'étape 102c dans la plateforme PF2, ce couple est transmis à la plateforme PF1 pour mise en oeuvre des réglages correspondants sur le capteur CPT1 ; notamment si le couple optimal est celui de la plateforme PF2, il est fourni à la plateforme PF1 pour être pris en compte pour la programmation ; et/ou

- fourni à (au moins) une troisième plateforme pour effectuer sa programmation de capteurs en fonction de ce couple optimal.

Par exemple, si la comparaison montre que le couple fourni par CPT1 est meilleur, on garde les précision / résolution proposées par le CPT1 (qui sera le cas échéant celui donné au CPT3), sont gardées inchangées par CPT1.

Dans un mode de réalisation, ce processus est mis en oeuvre cycliquement entre des couples distincts de plateformes de l'ensemble des plateformes constituant le système 1. Ainsi par exemple, le couple optimal est fourni en entrée d'au moins une plateforme PFi, i étant un entier compris entre 2 et n et une étape 10i, similaire à l'étape 102, est mise en oeuvre dans la plateforme PFi, suivi d'un ensemble d'étapes 200. Ceci permet à la plateforme PFi de profiter des améliorations déterminées à l'aide des deux plateformes PF1, PF2.

Dans un mode de réalisation, à la place du couple {localisation ; dimensions de l'objet}, un ensemble de données est transmis par la plateforme PF1 à l'étape 101d, puis considéré à l'ensemble 200 d'étapes comprenant, outre la localisation et les dimensions, un ou des éléments supplémentaires ayant une incidence sur les paramètres de réglage des capteurs 20, par exemple l'ouverture capteur, la résolution, la distance à l'objet, classification de l'objet.

Dans ce qui précède, une image radar est d'abord prise. Dans un autre mode de réalisation, c'est d'abord une image EO/IR qui est prise, puis une image radar. Dans un autre mode de réalisation, les capteurs CPT1 et CPT2 capturent des images de même type, i.e. de type radar ou de type EO/IR).

Les performances des capteurs en EO/IR sont fortement dépendantes de l'environnement et des conditions de prise de vue. Ces conditions peuvent évoluer avec :

- la météo : jour / nuit, ensoleillement, nuages, brouillard, brume, neige / givre, pluie, vent ;

- les conditions de prise de vue, notamment l'interaction des mouvements du porteur, la hauteur et la distance à la cible observée ;

- les conditions de réglage du capteur optique, éventuellement les filtres ajoutés peuvent influer sur la qualité des vidéos et donc des possibilités de détection, d'analyse et de reconnaissance automatique.

Ces conditions n'ont pas les mêmes effets sur les capteurs électromagnétiques, notamment les conditions de jour/nuit, ensoleillement ... Contrairement aux capteurs EO/IR, le radar en mode SAR éclaire la scène. Il est donc moins tributaire des conditions extérieures. Il subit une atténuation en fonction de la pluie, mais il est aussi capable de mesurer la quantité de pluie et d'estimer les performances face à ces conditions. L'émission et la réception sont co-localisées (sauf cas particulier des bi statiques et des radars passifs). Les ombres portées par le radar sont donc déterministes.

Un procédé selon l'invention est pertinent pour traiter des acquisitions dans une zone Z de détection commune à des plateformes/capteurs hétérogènes. Lorsque les capteurs 20 CAPT1 sur PF1 et CAPT 2 sur PF2 pointent vers cette zone, ils permettent chacun de récupérer, en plus des informations propres aux détections, des informations secondaires qui correspondent à des dégradations de la qualité de détection provoqué par l'environnement (par exemple, en surveillance maritime, le SAR peut estimer une vitesse de vent en fonction du bruit de détection provoqué par les vagues).

Dans un mode de réalisation, en exploitant, voire en fusionnant, les informations secondaires issues d'au moins un des types de capteurs, voire des deux types de capteurs, il est déterminé, par un quelconque des modules de traitement 30, par exemple TRT1, TRT2, un état de l'environnement météo de la zone Z. Lorsque les conditions météo de la zone sont connues (ou estimées à partir notamment des informations secondaires issues d'un capteur, par exemple le capteur radar), il est possible de calculer une prévision de performances (estimation des dégradations dues aux conditions météo) pour un autre, par exemple I capteur EO/IR, ainsi que les réglages (ou traitements) optimaux qui y sont associés.

Des informations secondaires de capteur radar comportent par exemple le bruit de détection provoqué par les vagues, les vecteurs vitesses des cibles. Elles sont mesurés par le capteur radar, par exemple . Connaissant l'environnement, il est possible de corriger certains effets indésirables sur la qualité de l'image.

Des informations secondaires de capteur EO/IR comportent par exemple la mesure de la température extérieure et la connaissance de la déformation de l'image en fonction de cette température, le capteur peut utiliser si disponible des courbes de correction sur l'image.

A titre d'illustration, le capteur radar a un fort speckle dégradant la surface équivalente de l'objet. De même s'il y a de forte chaleur, l'image EO/IR est fortement dégradée du fait des déformations atmosphériques. Pour améliorer la justesse de la détermination de la surface équivalente de l'objet en fonction des mesures effectuées sur l'image capturée, elle est en outre déterminée en fonction d'un calcul des dimensions des ombres portées figurant sur l'image.

Dans le cadre du procédé représenté en figure 2, cette action peut se faire dans la phase de traitement opérée par TRT1 30, respectivementTRT2 30 selon le capteur CPT1, respectivement CPT2.

L'action de déclenche sur la mesure ou la connaissance des températures extérieures qui statistiquement doivent modifier la forme de l'objet. De même, pour le RADAR connaissance l'angle d'incidence de l'acquisition, on peut pré-supposer connaître la dégradation sur l'image SAR.

Les réglages et/ou le couple localisation/dimensions du CPT1 transmis au capteur de l'autre plateforme, CPT2, ont pour utilité la programmation du capteur CPT2 automatiquement et d'éventuellement améliorer sa qualité de détection. Une boucle de rétroaction analyse ensuite la nouvelle qualité de détection afin de vérifier qu'elle a été améliorée comme attendue ou si ce n'est pas le cas, utiliser les nouvelles informations secondaires obtenues afin d'améliorer l'acquisition des données du CPT1 (radar) de la zone et ainsi reproduire le processus d'optimisation des réglages.

L'avantage de la solution est de pouvoir transmettre à chaque drone les caractéristiques des cibles (taille, forme, ...) vers un autre drone, ce qui va permettre d'optimiser la programmation du capteur embarqué. La solution permet d'augmenter l'autonomie des systèmes embarqués et d'optimiser automatiquement les performances des capteurs sur des plateformes déportées, ce qui particulièrement utile dans des zones dont les interactions Homme-Systèmes ne sont pas systématiquement disponibles.

Dans un mode de réalisation de l'invention, la chaîne de capteurs 20 du système 1 est adaptée pour optimiser les capteurs et estimer les performances possibles en fonction des contraintes opérationnelles (climatiques, brouillage, pannes éventuelles, sous optimisation des réglages...).

En fonction des caractéristiques de la cible recherchée et des performances estimées, il est déterminé, dans un mode de réalisation, par un quelconque des modules de traitements 30, si la mission de détection est possible ou utopique.

### Méthodes de calcul de dimensions de l'objet

Il est maintenant décrit des méthodes de calcul de dimensions de l'objet qui sont par exemple utilisées par les modules de traitement dans les étapes 101, 102, ou 10i, i compris entre 1 et n.

Afin de pouvoir définir les caractéristiques de l'objet et améliorer sa détection, un post-traitement de l'image acquise est donc appliqué, comme indiqué en référence à la figure 2, pour permettre de définir les contours de l'objet considéré. Cette phase de calcul de contours permet d'améliorer la qualité de l'image en s'affranchissant des parasites environnementaux.

Dans la littérature, la plupart des traitements pour la détection des contours sont basés sur la détection de bords, et plus particulièrement sur le filtre de Sobel, et s'appuient sur l'étude du gradient de l'image : on est en présence d'un contour si dans une des deux directions de l'image on a une forte variation de l'amplitude des pixels.

Il est généralement appliqué un filtre de Sobel pour calculer les contours (permettant ainsi aussi de s'affranchir des aberrations dues aux capteurs : aberrations chromatiques, thermiques, speckle) ; puis un filtrage par hystérésis des contours est mis en oeuvre. Un algorithme de détection de Harris détecte ensuite les objets d'intérêt (il permet de détecter les coins dans une image) ; une mesure des dimensions des objets d'intérêt détecté est alors mise en oeuvre.

Dans le cadre du procédé 100, la taille de l'objet d'intérêt est estimée à partir des contours et de la résolution de l'image prise par un capteur. Cette information de taille permet de programmer automatiquement le pointage et l'ouverture d'un autre capteur.

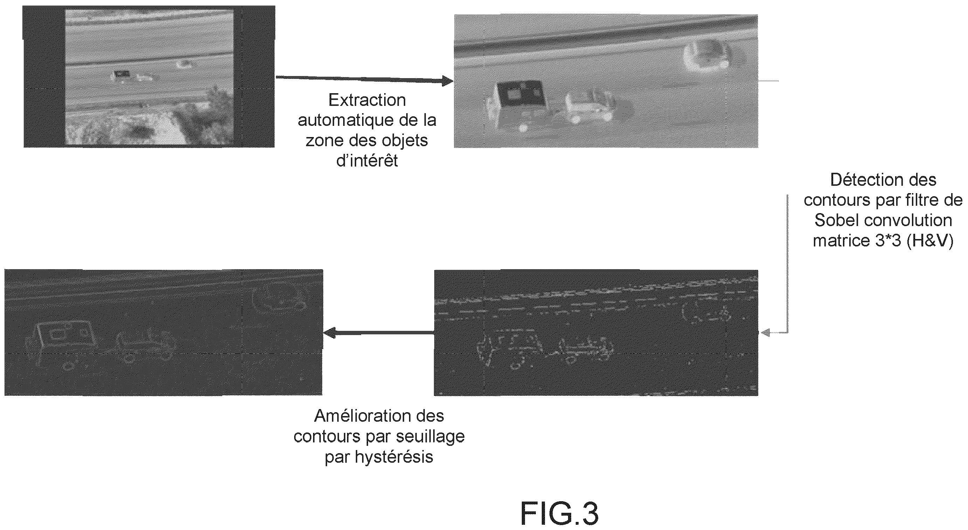

La figure 3 illustre décrit des étapes de calcul des contours des objets d'intérêt à partir d'une image EO/IR (les étapes sont similaires dans le cas d'une image SAR).

Le calcul du contour permet d'isoler l'objet observé dans son environnement pour avoir une mesure efficace de : sa longueur, $L_{obj}$, sa largueur $l_{obj}$ et sa surface apparente, $T_{obj}^{réel}$. La Surface apparente d'un objet d'intérêt est calculée à partir du nombre de pixels (X,Y) et de la résolution radiale de l'image, $\delta_r$.

Ainsi :

$$L_{obj} = X * \delta_r \quad (1)$$

et

$$l_{obj} = Y * \delta_r \quad (2)$$

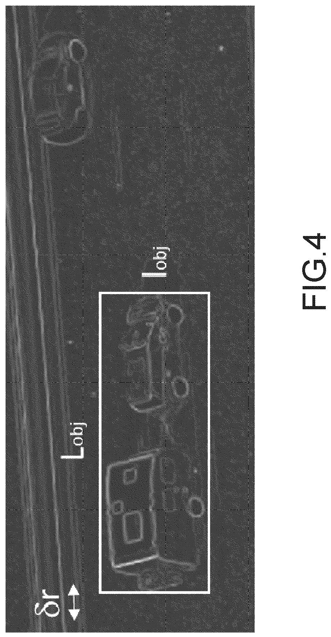

La figure 4 illustre ce calcul. La Surface apparente, $T_{obj}^{réel}$, suivant un axe correspond à la surface du rectangle blanc.

### Calcul des ombres portées

De la même manière, pour améliorer les performances de chaque capteur, il est possible de connaitre la taille et la forme de l'objet en fonction de l'ombre projetée par chaque capteur. En effet, comme indiqué plus haut, les effets de speckle pour le RADAR ou les déformations de l'image en fonction des conditions météo (par exemple, les déformations atmosphériques) peuvent avoir des conséquences sur les mesures de contour (image trop floue, mauvaise mesure de l'objet par le SAR...). Pour améliorer la mesure de l'objet, il est possible de mesurer l'ombre portée de l'objet par chaque capteur, permettant ainsi une meilleure appréciation de l'objet d'intérêt.

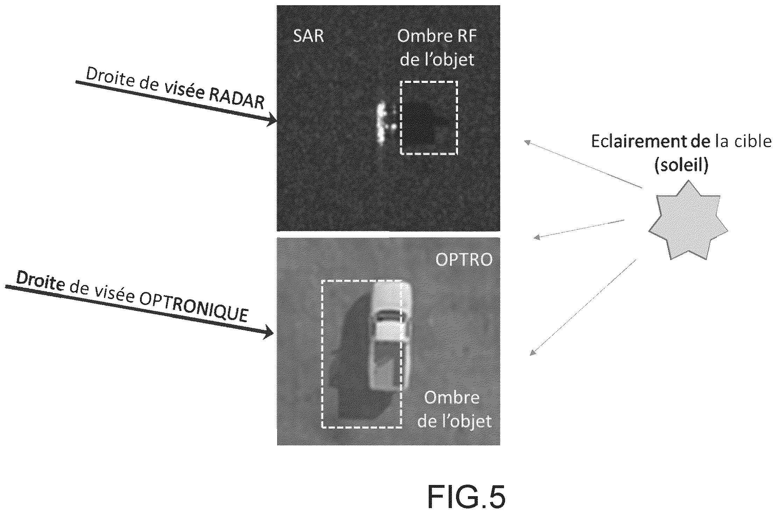

De ce fait, un traitement des ombres portées permet aussi de valider les hauteurs des cibles (bâtiments, véhicule...) et permet une corrélation des informations 3D entre l'éclairage zénithal de l'optique et les ombres portées du radar (radiales par rapport à l'éclairage) : cf. figure 5 comportant une image d'un même objet d'intérêt (pick-up) en imagerie SAR (en haut) et en EO/IR (en bas).

Connaissant la hauteur de la prise de vue, la taille de l'objet est déterminée en fonction de la mesure de l'ombre portée.

En optique, en fonction des positions respectives du soleil, du porteur par rapport à la cible, la hauteur de la cible est déterminable en calculant la taille de son ombre projetée.

Une image concaténée avec renseignement complémentaire des ombres consolidées et conjuguées permet de valider la représentation 3D (Figure 5).

## Modification des paramètres capteur : détermination de la résolution et ouverture de la caméra

Connaissant la résolution de l'image, il est possible de déterminer la taille de l'objet. Connaissant l'altitude du porteur qui fait l'acquisition, on peut déterminer l'ouverture de la caméra nécessaire au pointage efficace sur l'objet.

Une caméra dispose des éléments suivants :

La taille de l'image en sortie en X*Y Pixels (X et Y sont respectivement le nombre de pixels horizontaux et verticaux d'une image)

- la taille du pixel : xx $\mu$m (micromètre)
- la focale de l'optique, F
- Instantaneous Field of View (IFOV) en rad.

Le but est de déterminer la taille d'un objet, connaissant le nombre de pixel, la distance à l'objet.

Soit $\beta$ correspondant à la taille en radian de l'objet dans l'image

$$\beta = \tan\left(\frac{T_{obj}^{réel}}{D}\right)(4)$$

avec

D : distance à la cible

$T_{obj}^{réel}$ : Taille suivant un axe (ou Surface Apparente) (ce qu'on recherche)

Pour obtenir la taille en pixel de l'objet dans l'image, on utilise l'IFOV de la caméra, tel que :

$$Re_{pxl} = \frac{\beta}{IFOV} \quad (5)$$

Ainsi, connaissant la distance à l'objet, on peut déterminer la taille correspondante :

$$T_{obj}^{réel} = D * \tan^{-1}\left(Re_{pxl} * IFOV\right) \qquad (6)$$

## Calcul des performances (traitement effectué lors de l'étape 202)

Il est possible d'utiliser des méthodes statistiques pour la mesure des performances.

Dans ce cas, la partie optique va détecter les déplacements des cibles dans une zone la plus large possible.

La partie radar isolera les cibles détectées dans la même zone.

Un traitement des vitesses est effectué : les vitesses tangentielles sont moins précises en radar, les vitesses radiales sont plus difficiles à estimer en optique.

La quantité de cibles détectées dans chacun des capteurs CPT1, CPT2 est comparée en prenant en compte les paramètres intrinsèques des capteurs. Un tri en fonction des vecteurs vitesses sera opéré et permettra de prendre en compte les différences entre les capteurs.

Par exemple les vecteurs à +/-45° seront pondérés plus fortement car les informations sont comparables.

Une densité de détection de cible sera effectuée par les deux capteurs avec une comparaison par zones.

Les conditions d'acquisition de la partie optique seront prises en compte pour cette comparaison.

A partir de ces mesures, il est possible de déterminer la forme et/ou la taille exacte(s) de l'objet qui permettra d'améliorer les performances des capteurs par modification des paramètres de programmation des capteurs en fonction de la forme et/ou de la taille exacte(s).

## Revendications

1. Procédé d'amélioration des performances de capteurs (20) dans un système (1) comportant une pluralité de plateformes (10) embarquant chacune au moins un capteur (20) et un module de traitement électronique (30), les plateformes étant reliées par des liaisons de télétransmission, ledit procédé comportant les étapes suivantes :

   - capture d'une première image par un premier capteur (20) sur une première plateforme (30) du système et programmé selon une première configuration du premier capteur ;
   - détermination, par un premier bloc de traitement (30) sur la première plateforme (10), d'un premier ensemble d'informations, en fonction de la première image capturée, ledit ensemble d'informations comprenant au moins une information de localisation d'un objet détecté sur ladite première image et une information indiquant la taille dudit objet ;
   - télétransmission dudit premier ensemble d'information de la première plateforme (10) à une deuxième plateforme (10) ;

- réception, par la deuxième plateforme (10) comprenant un deuxième capteur (20) et un deuxième bloc de traitement (30), dudit premier ensemble d'information et détermination, par le deuxième module de traitement (30), d'une première configuration du deuxième capteur (20) en fonction des informations de l'ensemble d'informations ;

- capture d'une deuxième image comprenant ledit objet par le deuxième capteur (20) programmé selon ladite première configuration du deuxième capteur déterminée ;

- détermination, par le deuxième bloc de traitement (30), d'un deuxième ensemble d'informations, en fonction de la deuxième image capturée, ledit deuxième ensemble d'informations comprenant au moins une information de localisation dudit objet détecté sur ladite deuxième image et une information indiquant la taille dudit objet ;

- évaluation, en fonction des premier et deuxième ensembles d'informations, par l'un des premier et deuxième modules de traitement (30) et sélection, en fonction de cette évaluation, d'un des premier et deuxième ensembles d'informations ;

- déclenchement de la programmation, selon une deuxième configuration fonction de l'ensemble d'informations sélectionné, de celui des premier et deuxième capteurs (20) non programmé selon ledit ensemble d'informations sélectionné et capture d'une nouvelle image par ledit capteur programmé selon ladite deuxième configuration.

2. Procédé d'amélioration des performances de capteurs (20) dans un système (1) selon la revendication 1, selon lequel ledit ensemble d'informations comprend en outre au moins une information relative à la capture d'image parmi : l'ouverture capteur, la résolution, la distance à l'objet, la classification de l'objet.

3. Procédé d'amélioration des performances de capteurs (20) dans un système (1) selon la revendication 1 ou 2, selon lequel les spectres d'acquisition des premier et deuxième capteurs sont séparés, par exemple un des premier et deuxième capteurs est de type radar et l'autre des premier et deuxième capteur est de type EO/IR.

4. Procédé d'amélioration des performances de capteurs (20) dans un système (1) selon l'une quelconque des revendications précédentes, selon lequel les étapes du procédé sont mises en oeuvre cycliquement entre des couples distincts de plateformes (10) du système.

5. Procédé d'amélioration des performances de capteurs (20) dans un système (1) selon l'une quelconque des revendications précédentes, comprenant en outre le déclenchement de la programmation, selon une troisième configuration fonction de l'ensemble d'informations sélectionné, d'un capteur (20) d'une plateforme (10) distincte des première et deuxième plateformes et capture d'une nouvelle image par ledit capteur programmé selon ladite troisième configuration.

6. Système (1) comportant une pluralité de plateformes (10) embarquant chacune au moins un capteur (20) et un module de traitement électronique (30), les plateformes étant reliées par des liaisons de télétransmission, ledit système comprenant :

- un premier capteur (20) sur une première plateforme (10) du système et programmé selon une première configuration du premier capteur est adapté pour capturer une première image par;

- un premier bloc de traitement (30) sur la première plateforme, est adapté pour déterminer un premier ensemble d'informations, en fonction de la première image capturée, ledit ensemble d'informations comprenant au moins une information de localisation d'un objet détecté sur ladite première image et une information indiquant la taille dudit objet ;

- la première plateforme (10) est adaptée pour télétransmettre ledit premier ensemble d'information à une deuxième plateforme (10) ;

- ladite deuxième plateforme (10) comprenant un deuxième capteur (20) et un deuxième bloc de traitement (30), est adaptée pour recevoir ledit premier ensemble d'information et le deuxième module de traitement est adapté pour déterminer, une première configuration du deuxième capteur en fonction des informations de l'ensemble d'informations ;

- le deuxième capteur (20) est adapté pour, programmé selon ladite première configuration du deuxième capteur déterminée, capturer une deuxième image comprenant ledit objet ;

- le deuxième bloc de traitement (30) est adapté pour déterminer un deuxième ensemble d'informations, en fonction de la deuxième image capturée, ledit deuxième ensemble d'informations comprenant au moins une information de localisation dudit objet détecté sur ladite deuxième image et une information indiquant la taille dudit objet ;

- l'un des premier et deuxième modules de traitement (30) est adapté pour effectuer une évaluation, en fonction des premier et deuxième ensembles d'informations, et pour sélectionner, en fonction de cette évaluation, un des premier et deuxième ensembles d'informations ;
- ledit système (1) étant adapté pour déclencher la programmation, selon une deuxième configuration fonction de l'ensemble d'informations sélectionné, de celui des premier et deuxième capteurs non programmé selon ledit ensemble d'informations sélectionné et pour déclencher la capture d'une nouvelle image par ledit capteur programmé selon ladite deuxième configuration.

7. Système (1) selon la revendication 6, dans lequel ledit ensemble d'informations comprend en outre au moins une information relative à la capture d'image parmi :
l'ouverture capteur, la résolution, la distance à l'objet, la classification de l'objet.

8. Système (1) selon la revendication 6 ou 7, dans lequel les spectres d'acquisition des premier et deuxième capteurs sont séparés, par exemple un des premier et deuxième capteurs est de type radar et l'autre des premier et deuxième capteur est de type EO/IR.

9. Système (1) selon l'une quelconque des revendications 6 à 8, adapté pour mettre en oeuvre cycliquement lesdites opérations entre des couples distincts de plateformes du système.

10. Système (1) selon l'une quelconque des revendications précédentes 6 à 9, adapté en outre pour déclencher la programmation, selon une troisième configuration fonction de l'ensemble d'informations sélectionné, d'un capteur (20) d'une plateforme (10) distincte des première et deuxième plateformes et capture d'une nouvelle image par ledit capteur (20) programmé selon ladite troisième configuration.

PF1          PF2          PFn          1

10           10           10

30           30           30

TRT1         TRT2         TRTn

20           20     •••   20

CPT1         CPT2         CPTn

N     60

FIG.1

FIG.2

EP 4 542 250 A1

Extraction automatique de la zone des objets d'intérêt

Détection des contours par filtre de Sobel convolution matrice 3*3 (H&V)

Amélioration des contours par seuillage par hystérésis

FIG.3

EP 4 542 250 A1

FIG.4

FIG.5

Europäisches
Patentamt

European
Patent Office

Office européen
des brevets

# RAPPORT DE RECHERCHE EUROPEENNE

Numéro de la demande

EP 24 20 7249

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JOHN A. SAUTER ET AL.: "Distributed pheromone-based swarming control of unmanned air and ground vehicles for RSTA", PROC. SPIE 6962, UNMANNED SYSTEMS TECHNOLOGY X, 16 août 2008 (2008-08-16), XP040437333, DOI: 10.1117/12.782271 * sec. 3 * | 1-10 | INV. G01S7/00 G01S13/86 |
| A | PREECE A ET AL: "Reasoning and resource allocation for sensor-mission assignment in a coalition context", MILITARY COMMUNICATIONS CONFERENCE, 2008. MILCOM 2008. IEEE, IEEE, PISCATAWAY, NJ, USA, 16 novembre 2008 (2008-11-16), pages 1-7, XP031407908, ISBN: 978-1-4244-2676-8 * le document en entier * | 1-10 | |
| A | NEWMAN A J ET AL: "Synchronized GMTI radar collection management in a coalition environment", INFORMATION FUSION, 2002. PROCEEDINGS OF THE FIFTH INTERNATIONAL CONFE RENCE ON JULY 8-11, 2002, PISCATAWAY, NJ, USA,IEEE, 8 juillet 2002 (2002-07-08), page 1046, XP032457164, DOI: 10.1109/ICIF.2002.1020927 ISBN: 978-0-9721844-1-0 * le document en entier * | 1-10 | **DOMAINES TECHNIQUES RECHERCHES (IPC)**<br><br>G01S |

-/--

Le présent rapport a été établi pour toutes les revendications

| Lieu de la recherche | Date d'achèvement de la recherche | Examinateur |
|---|---|---|
| Munich | 10 février 2025 | Rudolf, Hans |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 24 20 7249

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | XUETING LI ET AL: "Radar selection for single-target tracking in radar networks", 2015 IEEE RADAR CONFERENCE (RADARCON), IEEE, 10 mai 2015 (2015-05-10), pages 545-550, XP032788311, DOI: 10.1109/RADAR.2015.7131058 * le document en entier * ----- | 1-10 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 10 février 2025 | Rudolf, Hans |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
.....................................................................................
& : membre de la même famille, document correspondant

EPO FORM 1503 03.82 (P04C02)